# EUROPEAN PATENT SPECIFICATION

(11) **EP 0 849 496 B1**
(45) Date of publication and mention of the grant of the patent: **10.04.2002**
(21) Application number: 97202788.2
(22) Date of filing: 10.05.1994
(51) Int. Cl.: F16F 15/00, F16F 15/073, F16F 15/023, B60N 2/52, B66F 9/075

(54) **Vibration Proofing Structure**
Vibrationsdämpfende Struktur
Structure amortissant les vibrations

(30) Priority: 14.05.1993 JP 14712293; 06.05.1994 JP 12795794
(43) Date of publication of application: 24.06.1998
(62) Divisional of application: 94303346.4
(73) Proprietor: Kiyoko, Ikeda, Chuo-Ku, Tokyo (JP)
(72) Inventor: Ikeda, Masahiko, Kamakura-shi, Kanagawa-ken (JP)
(74) Representative: Wombwell, Francis

(56) References cited:
- FR-A- 1 362 687
- US-A- 2 312 718
- PATENT ABSTRACTS OF JAPAN vol. 015, no. 358 (M-1156), 10 September 1991 & JP 03 140651 A (MASAHIKO IKEDA;OTHERS: 01), 14 June 1991

## Description

This invention relates to a vibration proofing structure, and more particularly to a vibration proofing structure suitable for use for various applications including a seat for a vehicle or the like, a construction, an internal combustion engine, a rotary machine, a machine tool, a precision instrument, a measuring instrument and the like.

Conventionally, a vibration proofing structure which is constructed so as to incorporate a spring therein has been principally used for a driver's seat of each of a car and a truck, a seat provided in a driver's cab of each of a train and a construction machine and the like. Also, a vibration proofing mechanism or structure having a vibration proof rubber, an oil damper or the like incorporated therein has been used for a construction such as a general construction, nuclear facilities, a tank, plant facilities or the like. Further, a vibration proofing structure in which a spring, a vibration proof rubber, an oil damper or the like is incorporated has been used for an internal combustion engine, a rotary machine, a machine tool, a precision instrument, a measuring instrument or the like.

Unfortunately, such conventional vibration proofing structures as described above each fail to exhibit a satisfactory vibration proofing function. In view of the above, the inventor developed a vibration proofing mechanism or structure which is capable of effectively absorbing vibration as disclosed in Japanese Patent Application Laid-Open Publication No. 140651/1991, (Japanese Patent No. 2676559) showing the prior art according to the preamble of claim 1. The vibration proofing structure disclosed is constructed in such a manner that a base and an oil damper including a cylinder in which a piston and a rod connected to each other are connected to each other through a guide mechanism for guiding the base and oil damper so as to permit both to be linearly reciprocated relative to each other. Also, the vibration proofing structure includes a mounting bar which is mounted at one end thereof on the rod in a manner to extend perpendicularly to the rod and projected at the other end thereof from the cylinder.

The vibration proofing structure disclosed in Japanese Patent Application Laid-Open Publication No. 3140651/1991 which is constructed as described above is substantially increased in vibration proofing function as compared with the above-described conventional structures and exhibits satisfactory applicability to various technical fields. Nevertheless, the vibration proofing structure disclosed is disadvantageous in that it is often required to change a configuration thereof depending on technical fields to which it is applied.

### SUMMARY OF THE INVENTION

The present invention has been made in view of the foregoing disadvantage of the prior art.

Accordingly, it is an object of the present invention to provide a vibration proofing structure which is capable of exhibiting satisfactory vibration proofing performance against vibration in both a horizontal direction and a vertical direction.

In accordance with the present invention, a vibration proofing structure is provided as defined by the appended claims.

In a preferred embodiment of the present invention, the spring constant of each of the springs arranged between the washer-like spring bearings and the second base is set to be about 10 to 25 and the spring constant of the large spring arranged between the piston and the bottom of the vertical-type cylinder is set to be about 30 to 80.

In a preferred embodiment of the present invention, the control means for externally controlling the amount of oil transferred between the upper oil chamber and the lower oil chamber through the oil passage means comprises a bowl-like cap arranged on the piston for controlling the amount of oil transferred between the upper oil chamber and the lower oil chamber through the oil passage means, a spring arranged between the bowl-like cap and an upper surface of the piston to upwardly force the cap, a rod member which is vertically arranged in the vertical-type cylinder so as to be upwardly projected at an upper end thereof from the vertical-type cylinder and on which the piston is fitted, a pipe fitted on the rod member in the vertical-type cylinder for adjusting a gap between the bowl-like cap and the upper surface of the piston, and an adjustment nut threadedly fitted on the rod member so as to be positioned at an upper end of the pipe, so that slight vertical movement of the adjustment nut permits the gap between the bowl-like cap and the upper surface of the piston to be adjusted to control the amount of oil transferred between the upper oil chamber and the lower oil chamber. The large spring is arranged between the piston and the bottom of the vertical-type cylinder while being kept compressed to a predetermined degree.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings, wherein:
Fig. 1 is a vertical sectional view showing an embodiment of a vibration proofing structure according to the present invention;
Fig. 2 is an exploded perspective view showing an essential part of the vibration proofing structure shown in Fig. 1;
Fig. 3 is a side elevation view in section showing a vertical-type oil damper incorporated in the vibration proofing structure shown in Fig. 1;
Fig. 4 is a plan view showing the arrangement of the components of the embodiment of the vibration proofing structure inclusive of horizontal-type dampers, vertical-type dampers and struts on the bottom base;
Fig. 5 is a plan view showing a part of the vibration proofing structure of Fig. 1; and
Fig. 6 is a perspective view showing a strut incorporated in the vibration proofing structure of Fig. 1.

### DETAILED DESCRIPTION OF THE PREFERRED EMBODIMENTS

Now, a vibration proofing structure according to the present invention will be described hereinafter with reference to the accompanying drawings.

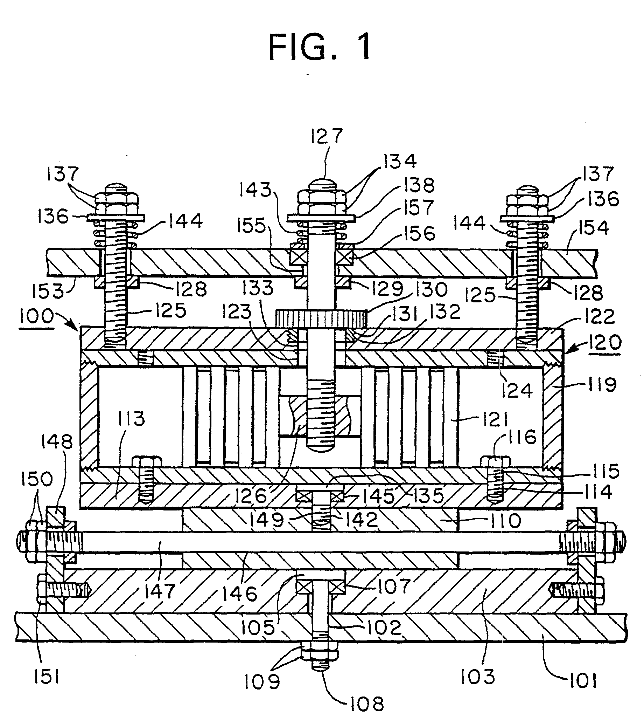

Referring to Figs. 1 to 4, an embodiment of a vibration proofing structure according to the present invention is illustrated.

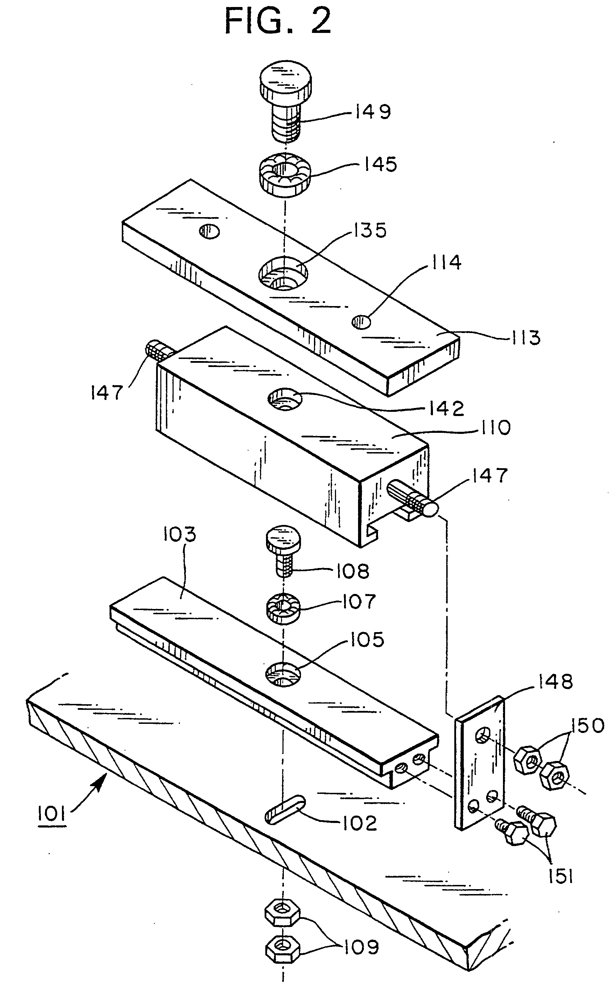

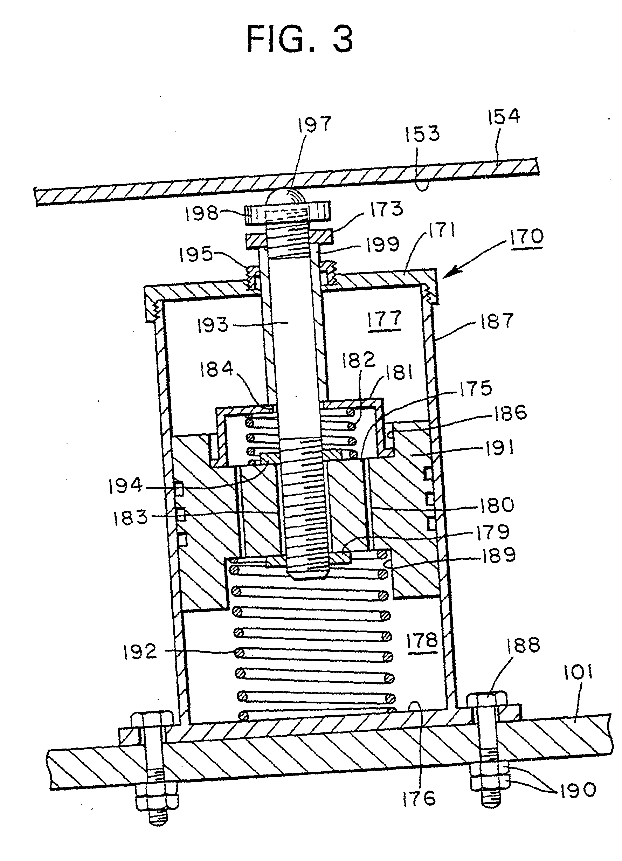

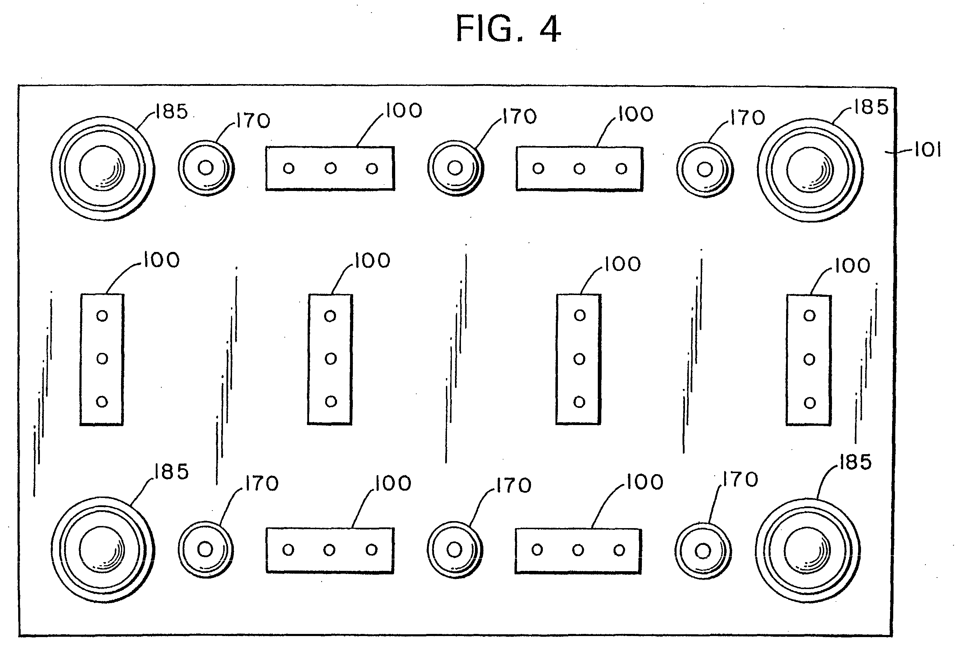

Fig. 1 is a vertical sectional view showing a vibration proofing structure 100 including a horizontal-type oil damper 102, Fig. 2 is an exploded perspective view showing an essential part of a guide mechanism. Fig. 3 is a vertical sectional view showing a vertical-type oil damper 170, and Fig. 4 is a top plan view showing arrangement of the vibration proofing structure from which a part thereof is omitted for the sake of brevity.

More particularly, the vibration proofing structure includes a first or lower base 101 and an elongated rail 103 formed into a T-like shape in section as in the first embodiment and mounted on the lower base 101 by means of a bolt 108. The rail 103 is formed at a central portion thereof with an aperture 105, which is formed at a lower portion thereof with a circular depression (not shown). The depression is fitted therein with a bearing 107 and then the bolt 108 is downwardly inserted through the aperture 105. Thereafter, the bolt 108 is inserted at a lower portion thereof through a slot-like through-hole 102 of the base 101 and threadedly fitted on a lower end thereof with a double nut 109, resulting in the rail 103 being mounted on the base 101 while keeping a longitudinal axis of the rail 103 perpendicular to longitudinal axis of the through-hole 102. The bolt 108 is formed into a diameter smaller than a width of the slot-like through-hole 102 defined in a lateral direction thereof, so that it may be reciprocated in the through-hole 102 along the longitudinal axis of the through-hole 102 in a lateral direction of the base 101, to thereby permit the rail 103 to be reciprocated in the lateral direction of the lower base 101. Also, the above-described construction permits the rail 103 to be horizontally rotated about the bearing 107.

The vibration proofing structure of the second embodiment also includes a guide member 110, which is formed on a lower surface thereof with a recess of a T-like shape in section so as to permit the rail 103 to be snugly fitted in recess, resulting in being mounted on the rail 103 so as to be slidable in a longitudinal direction of the rail 103. The guide member 110 is formed with a circular through-hole 146 in a manner to horizontally extend in a longitudinal direction thereof, through which an elongated rod 147 of a circular shape in section is inserted. The rod 147 is connected at both ends thereof to both ends of the rail 103 by means of connection plates 148, respectively. As shown in Figs. 1 and 2, double nuts 150 and bolts 151 are used for the purpose of the connection as above.

The guide member 110 is rotatably mounted thereon with a support plate 113, which is formed at a central portion thereof with a stepped through-hole, of which a step 135 is provided thereon with a bearing 145. Then, a bolt 149 is downwardly inserted via the through-hole and threadedly inserted at a lower portion thereof into a threaded hole 142 of the guide member 110, so that the support plate 113 may be mounted on the guide member 110 so as to be rotatable with respect to the guide member 110. The support plate 113 is fixedly mounted thereon with a horizontal-type oil damper 120. The oil damper 120 may be constructed in substantially the same manner as the oil dampers 20 and 44 incorporated in the first embodiment described above. The support plate 113 is formed at portions thereof spaced from each other in a longitudinal direction thereof with bolt holes 114. Reference numeral 119 designates a tank for the horizontal-type oil damper 120, which tank is formed into a rectangular cylindrical shape. The tank 119 is formed at a bottom thereof with threaded holes 115 in a manner to positionally correspond to or be aligned with the bolt holes 114 of the support plate 113. Then a bolt 116 is threadedly inserted through each of the bolt holes 114 and the threaded hole 115 corresponding thereto, to thereby securely mount the tank 119 on the guide member 110. The tank 119 is formed at a central portion of a top thereof with an elongated aperture 123 having a longitudinal axis defined in a longitudinal direction of the tank 119. Also, the tank 119 is formed at portions of the top thereof spaced from each other in a longitudinal direction thereof with small apertures 124, through which oil is fed to spaces defined on both sides of an interior of the tank 119. The small apertures 124 each are closed with a screw after feeding of oil into the tank. The tank 119 is provided therein with a pair of pistons 121 in a manner to be arranged in a row in the longitudinal direction thereof. The pistons 121 are connected to each other through a connection bar 126 arranged therebetween. The connection bar 126 is threadedly mounted on a central portion thereof with a rod 127, which is arranged so as to upwardly extend from the connection bar, resulting in being upwardly projected through the aperture 123 from the tank 119. The tank 119 is provided on the top thereof with a holding plate 122, to thereby fully close the small aperture 124. The holding plate 122 is formed at a central portion thereof with an aperture 133 of the same configuration as the aperture 123 so as to positionally correspond to the aperture 123.

Above the holding plate 122, a second or upper base 154 is arranged so as to be spaced at a predetermined interval from the holding plate 122. The upper base 154 is formed at a portion thereof positionally corresponding to the aperture 123 of the tank 19 and the aperture 133 of the holding plate 122 with an aperture 155. The rod 127 upwardly extending from the interior of the tank 119 is upwardly inserted at an upper portion thereof through the apertures 123, 133 and 155 in turn. The rod 127 is fitted on a portion thereof position in the aperture 155 of the base 154 with a bearing 156. Also, the rod 127 is threadedly securely fitted on a portion thereof positioned above the bearing 156 with a bearing holder 157, to thereby prevent the bearing 156 from being dislocated from the aperture 155.

The holding plate 122 is threadedly mounted on both sides of an upper surface thereof defined in a longitudinal direction thereof with support rods 125 upwardly extending therefrom. The support rods 125 which are arranged so as to be spaced from each other in the longitudinal direction of the holding plate 122 each are upwardly slidably inserted through the upper base 154 and mounted on an upper end thereof with a washer-like spring bearing 136. The support rods 125 each are fitted on a portion thereof positioned between each of the spring bearings 136 and the base 154 with a spring 144 of a predetermined spring constant. The rod 127 is mounted on an upper end thereof with a washer-like spring bearing 138 and fitted on a portion thereof positioned between the spring bearing 138 and the base 154 with a spring 143 of a predetermined spring constant.

The spring 143 and 144 may have the same spring constant, which may be set to be about 10 to 25. The spring 143 and 144 each may comprise a coiled spring. The vertical-type oil damper 170 briefly described above includes a bottom wall 176 and is provided therein with a piston 191, as shown in Fig. 3. Between the piston 191 and the bottom wall 176 is arranged a large spring 192 having a spring constant of about 30 to 80. Thus, the spring constant of the large spring 192 is set to be about three times as large as that of the springs 143 and 144. The large spring 192 may comprise a coiled spring. In such arrangement as shown in Fig. 4, the springs 143 and 144 and the large spring 192 may be formed into such dimensions as shown in Tables 1 to 4 in correspondence to large load (about 5 tons), intermediate load (about 3 tons) and small load (about 2 tons), respectively, wherein Table 2 shows the dimensions when the large coiled spring 192 comprises a double coil.

**Table 1**

| | Large Load (About 5 Tons) | |
|---|---|---|
| | Coiled Springs (143, 144) | Large Coiled Spring (192) |
| Wire Diameter | 5 mm | 40 mm |
| Outer Diameter of Coil | 29 mm | 220 mm |
| Number of Active Turns | 8 | 5.5 |
| Free Length of Coil | 50 mm | 330 mm |
| Spring Constant | 25 | 80 |

**Table 2**

| | Large Load (About 5 Tons) | |
|---|---|---|
| | Use of Double Coiled Spring as Large Coiled Spring | |
| Wire Diameter | 30 mm | 20 mm |
| Outer Diameter of Coil | 200 mm | 120 mm |
| Number of Active Turns | 3.3 | 5.3 |
| Free Length of Coil | 160 mm | 150 mm |
| Spring Constant | 50 | 30 |

**Table 3**

| | Intermediate Load (About 3 Tons) | |
|---|---|---|
| | Coiled Springs (143, 144) | Large Coiled Spring (192) |
| Wire Diameter | 5 mm | 20 mm |
| Outer Diameter of Coil | 27 mm | 115 mm |
| Number of Active Turns | 5 | 3 |
| Free Length of Coil | 45 mm | 100 mm |
| Spring Constant | 12 | 60 |

**Table 4**

| | Small Load (About 3 Tons) | |
|---|---|---|
| | Coiled Springs (143, 144) | Large Coiled Spring (192) |
| Wire Diameter | 4 mm | 20 mm |
| Outer Diameter of Coil | 22 mm | 120 mm |
| Number of Active Turns | 4 | 5.3 |
| Free Length of Coil | 24 mm | 150 mm |
| Spring Constant | 10 | 30 |

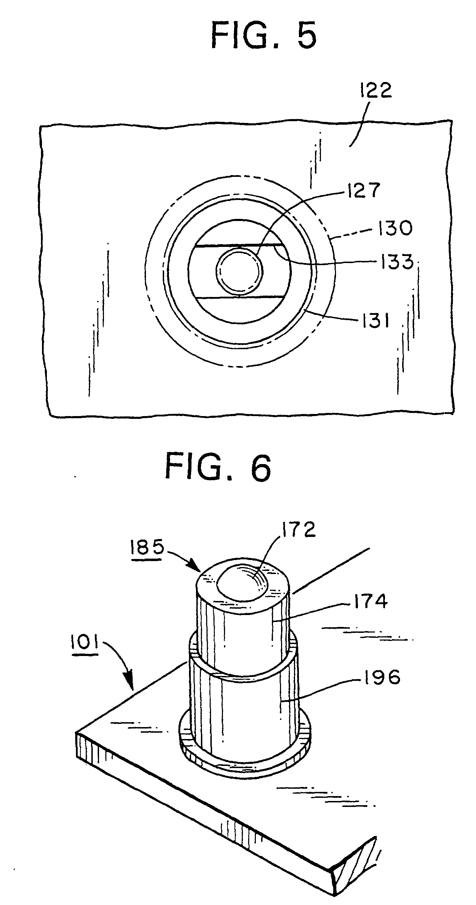

In Fig. 1 reference numerals 128 and 129 designate nuts for positioning the support rods 125 and rod 127, respectively, and 130 is an oil leakproof lid through which the rod is inserted, of which a mounting manner is detailedly shown in Fig. 5. For the purpose of permitting the oil leakproof lid 130 to prevent oil in the tank 119 from leaking therefrom, a threaded cylinder 131 of a small length, as shown in Figs. 1 and 5, is threadedly fitted in a threaded aperture 132 of the holding plate 122 so as to be concentric with the aperture 133 of the holding plate 122 and then the lid 130 is tightly contacted with the threaded cylinder 131 while being kept threadedly fitted on the rod 127. The cylinder 131 is formed into an inner diameter equal to or larger than a maximum diameter of the elongated aperture 133 having a longitudinal axis defined in the longitudinal direction of the tank 119. In Fig. 1 reference numerals 134 and 137 designate double nuts threadedly mounted on the rod 127 and support rods 125, respectively.

Fig. 3, as described above, shows the vertical-type oil damper 170. The vertical-type oil damper 170 is fixed on the lower base 101 by means of bolts 188 and double nuts 190 and contacted at an upper portion thereof with a rear surface 153 of the upper base 154 through a hemispherical member 197 mounted on an upper end of a rod 193 through a seat 198. In Fig. 3, reference numerals 179 and 194 each designate a nut for fixing a rod 193 in the piston 191. 183 is a through-hole formed via the piston 191 briefly described above for inserting the rod 193 therethrough and 184 is a through-hole formed via a bowl-like cap 181 therethrough. In order to facilitate arrangement of the bowl-like cap 181 on piston 191 while keeping a coiled spring 182 fitted on the rod 193 between the cap 181 and the piston 191, the piston 191 is preferably formed on an upper surface thereof with a recess 186 acting as a spring bearing as well as a cap receiver, as shown in Fig. 3. Also the piston 191 is preferably formed on a lower surface thereof with a recess 189 acting as a spring bearing, to thereby facilitate arrangement of the large spring 192 between the piston 191 and the above-described lower wall 176 of the oil damper 170. Reference numeral 195 designates an oil leakproof cap for preventing oil from leaking from the oil damper 170. The cap 195 is threadedly fitted in the lid 171 of the oil damper 170 and the rod 193 is inserted through a central portion of the cap 195. Reference numeral 180 designates through-holes vertically formed via the piston 191 so as to act as an oil passage means.

Fig. 4, as briefly described above, shows an example of arrangement of the vibration proofing structures 100 each including the horizontal-type oil damper 102, the vertical-type oil dampers 170 and struts 185. In the example shown in Fig. 4, eight such vibration proofing structures 100, six such vertical-type oil damper 170 are arranged. The struts 185 each include a cylinder 174 of a small length having a hemispherical member 172 mounted on an upper end thereof and a cylindrical pedestal 196 for fittedly holding the cylinder 174 therein, as shown in Fig. 13. More particularly, the cylindrical pedestal 196 is provided therein with an elastic cushioning member (not shown), so that the cylinder 174 may be kept elastically upwardly forced to maintain the strut 185 at a predetermined height or to make a height of the strut 185 correspond to an interval between the second or upper base 154 and the first or lower base 101. The cylindrical pedestal 196 is fixedly bolted to the lower base 101 which is formed into a rectangular shape.

In the example shown in Fig. 4, the struts 185 are located on the lower rectangular base 101 so as to be in proximity to corners thereof. Each one vibration proofing structure 100 including the horizontal-type oil damper is arranged between the struts 185 along each of the short sides of the base 101 in such a manner that a longitudinal axis of the structure 100 lies parallel with a lateral axis of the lower base 101. Also, each three vertical-type oil dampers 170 are arranged in a row between the struts 185 along each of long sides of the lower rectangular base 101, wherein two of the three dampers 170 are positioned in proximity to the struts 185, respectively, and the remaining damper 170 is intermediate between the two dampers 170. Between each adjacent two of the vertical-type oil dampers 170 arranged along each of the long sides of the base 101 is arranged the vibration proofing structure 100 including the horizontal-type oil damper in such a manner that the longitudinal axis of the structure 100 lies parallel to a longitudinal axis of the base 100. This results in the vibration proofing structures 100 located on both long sides of the base 101 being rendered positionally opposite to each other. Further, each one vibration proofing structure 100 is arranged between each two vibration proofing structures 100 located on both sides of the base 101 so as to be opposite to each other in such a manner that a longitudinal axis of the one vibration proofing structure is rendered perpendicular to that of the two ones or defined in the lateral direction of the base 101. The arrangement shown in Fig. 4 is a mere example, therefore, the number of components arranged may be varied as described depending on a total weight or load of an object such as a construction or the like carried on the upper base 154.

As described above, the total weight is substantially supported by the struts 185. However, when vertical vibration is applied to the arrangement, the vertical-type oil dampers 170 bear it for a slight period of time. Thus, adjustment of viscous damping of each of the vertical-type oil dampers 170 by means of the adjustment nut 173 is carried out depending on the total weight and settlement of the arrangement.

Now, the manner of operation of the vibration proofing structure of Figs. 1 to 4 will be described hereinafter.

As will be noted from the foregoing, the vibration proofing structure is so constructed that the first or lower base 101 and second or upper base 154 are arranged; the plural rails 103 are mounted at predetermined positions on the lower base 101; the guide members 110 each are fittedly mounted on each of the rails 103 so as to be slidable in the longitudinal direction of the rail 103; each of the plural horizontal-type oil dampers 120 is rotatably mounted on the guide member 110 and includes the tank 119 rotatably mounted on the guide member 110, the pistons 121 arranged in the tank 119, the rod 127 mounted at one end thereof on the pistons so as to render the axis thereof perpendicular to the longitudinal axis of the pistons 121 and outwardly extending at the other end thereof from the tank 119 so as to be slidably inserted through the second or upper base 154; the plural struts 185 each are mounted on the lower base 101 for bearing load downwardly applied through the upper base 154, arranged so as to upwardly extend therefrom and provided on the upper end thereof with the hemispherical member; the holding plates 122 each are arranged on each of the horizontal-type oil dampers 120; and the rod 127 is inserted at the other end thereof through the holding plate 122 so as to permit the horizontal-type oil damper 120 to be rotated about the rod 127 with respect to the holding plate 122 and is inserted through the upper base 154 while being rotatably supported by means of the bearing 156 so as to permit the horizontal-type oil damper 120 to be rotated with respect to the second base 154.

Such construction, when complicated vibration in both horizontal and vertical directions such as vibration at a place near a seismic center is applied to the lower base 101, effectively prevents vibration in the horizontal direction from being transmitted to the upper base 154.

The lower base 101 is guided by a guide mechanism comprising the rail 103 and guide member 110, to thereby be reciprocated while leaving the oil damper 120, resulting in preventing transmission of vibration to the oil damper 120. In this instance, the base 101 would often fail to smoothly reciprocate due to application, to the oil damper 120, of large load sufficient to cause increased friction to be produced between the guide mechanism and the oil damper 120. However, when the base 101 fails to smoothly reciprocate, the oil damper 120 acts as a vibration absorber for absorbing the vibration. More particularly, a phenomenon that the base 101 is to reciprocate while leaving the oil damper 120 and a vibration absorbing action of the oil damper 120 cooperate with each other to effectively absorb vibration. Vibration in a direction oblique to the oil damper 120 is often applied to the base 101. Application of the oblique vibration causes the lower base 101 to reciprocate by a distance corresponding to a component of the vibration and/or the oil damper 120 to exhibit a vibration absorbing action depending on the component.

The vibration proofing structure shown in Figs. 1 to 4, as described above, is further constructed that the support rods 125 are mounted on an upper surface of each of the holding plates 122 so as to be spaced from each other in a longitudinal direction of the holding plate 122 and upwardly extend therefrom. Each of the support rods 125 is vertically slidably inserted through the second or upper base 154 and provided at an upper end thereof with the washer-like spring bearing 136, and is fitted on the portion thereof defined between the spring bearing 136 and the upper base 154 with the spring 144 of a predetermined spring constant. The rod 127 is mounted on the upper end thereof with the washer-like spring bearing 138 and fitted on the portion thereof defined between the spring bearing 138 and the upper base 154 with the spring 143 of a predetermined spring constant. The vibration proofing structure also includes the plural vertical-type oil dampers 170 arranged in proximity to the horizontal-type oil dampers 120. The vertical-type oil dampers 170 each include the vertical-type cylinder 187, the piston 191 arranged in the cylinder 187 to define an upper oil chamber 177 and a lower oil chamber 178 therethrough in the cylinder 187 and formed with the oil passage means 180 in a manner to vertically extend therethrough, and the control means for externally controlling the amount of oil transferred through the oil passage means 180 between the upper oil chamber 177 and the lower oil chamber 178. The vertical-type oil dampers 170 each are provided therein with the large spring 192 in a manner to be interposed between the piston 191 and the bottom wall 176 of the vertical-type cylinder 187, wherein the large spring 192 has a spring constant about three times as large as the spring constant of each of the springs 143 and 144 described above. Such construction effectively prevents vertical vibration such as vibration occurring at a place near a seismic center from being transmitted from the first or lower base 101 to the second or upper base 154.

More particularly, vertical vibration applied to the lower base 101 causes vertical vibration of the rail 103 and guide member 110 together with the horizontal-type oil damper 120, rod 127 and support rods 125. However, the springs 143 and 144 and the large spring 192 cooperate with the vertical-type oil damper to attenuate the vertical vibration, to thereby prevent it from being transmitted to the upper base 154. The reason why the spring constant of each of the springs 143 and 144 and that of the large spring 192 are respectively set to be about 10 to 25 and about 30 to 80 is that the spring constants below the respective ranges described above cause the springs to fail to exhibit satisfactory vibration attenuation functions, whereas the spring constants above the ranges lead to an excessive increase in rigidity of the springs. In the illustrated embodiment, as shown in Fig. 4, the number of springs 143 and 144 arranged is twenty-four (24) which is three times as large as the number (8) of horizontal-type oil dampers 120 and the number of large springs 192 is six (6) which is the same as that of vertical-type oil dampers 170.

The large spring 192 is arranged between the piston 191 and the bottom 176 of the cylinder 187 while being kept compressed to a predetermined degree, to thereby eliminate an inherent time-lag defect of an oil damper that it exhibits a cushioning action after somewhat delay from application of vibration thereto. Thus, the vibration proofing structure of the illustrated embodiment exhibits a cushioning action upon application of vertical vibration thereto.

Now, the manner of operation of the vibration proofing structure shown in Figs. 1 to 4 carried out when vertical vibration is applied thereto will be described hereinafter. The struts 185 each are somewhat separated from the upper base 154 immediately after vertical vibration is applied to the lower base 101 and then are returned to the original position in a slight period of time as short as fractions of one second, during which the vertical-type oil dampers 170 each support the upper base 154. Application of excessive stress to the horizontal-type oil damper 120 is prevented by compression of the springs 143 and 144. Also, vibration which acts to cause each of the struts 185 to push up the upper base 154 is absorbed by the vertical-type oil damper 170. Even when the upper base 154 is slightly pushed up, it is returned in a slight period of time as described above. Thus, the oil damper 170 cooperates with the springs 143 and 144 and large spring 192 to minimise vertical movement of the upper base 154. The vertical-type oil burner 170 is provided at the top thereof with the hemispherical member 197 for the purpose of minimising an effect of horizontal vibration of the lower base 101 on the upper base 154.

While preferred embodiments of the invention have been described with a certain degree of particularity with reference to the drawings, obvious modifications and variations are possible in light of the above teachings. It is therefore to be understood that within the scope of the appended claims, the invention may be practised otherwise than as specifically described.

## Claims

1. A vibration proofing structure for large load comprising, a first base (101), a second base (154) and a plurality of oil dampers (120), said oil dampers (120) each including a tank (119), pistons (121) arranged in said tank (119), and a rod (127) having a first end and a second end, said first end being mounted on said pistons (121), so as to render an axis of said rod perpendicular to a longitudinal axis of said pistons (121) and said second end of said rod outwardly extending from said tank (119); a plurality of struts (185) each mounted on said first base (101) for bearing load downwardly applied through said second base (154), / arranged so as to upwardly extend therefrom and provided on an upper end thereof with a hemispherical member (172);
**characterised by**:
a plurality of rails (103) mounted at predetermined positions on said first base (101) ;
guide members (110) each fittedly mounted on each of said rails (103) so as to be slidable in a longitudinal direction of said rails (103);
said oil dampers being horizontal-type oil dampers (120), the tank (119) of each being rotatably mounted on each of said guide members (110), said second end of said rod (127) outwardly extending from said tank (119) being slidably inserted through said second base (154);
holding plates (122) each arranged on each of said horizontal-type oil dampers (120) ;
said rod (127) being inserted through said holding plate (122) so as to permit said horizontal-type oil damper (120) to be rotated about said rod (127) with respect to said holding plate (122) and being inserted through said second base (154) while being rotatably supported by means of a bearing (156) so as to permit said horizontal-type oil damper (120) to be rotated with respect to said second base (154);
support rods (125) mounted on an upper surface of each of said holding plates (122) so as to be spaced from each other in a longitudinal direction of said holding plate (122) and upwardly extend therefrom;
said support rods (125) each being vertically slidably inserted through said second base (154) and provided at an upper end thereof with a primary washer-like spring bearing (136) ;
said support rods (125) each being fitted on a portion thereof defined between said primary spring bearing (136) and said second base (154) with a support rod spring (144) of a predetermined spring constant; and
said rod (127)being mounted on an upper end thereof with a secondary washer-like spring bearing (136) and fitted on a portion thereof defined between said secondary spring bearing (136) and said second base (154) with a rod spring (143) of a predetermined spring constant; and
a plurality of vertical-type oil dampers (170)arranged in proximity to said horizontal-type oil dampers (120);
said vertical-type oil dampers (170) each including a vertical-type cylinder (187), a piston (191) arranged in said cylinder (187) to define an upper oil chamber (177) and a lower oil chamber (178) therethrough in said cylinder and formed with an oil passage means (180) in a manner to vertically extend therethrough, and a control means for externally controlling the amount of oil transferred through said oil passage means between said upper oil chamber (177) and said lower oil chamber (178);
said vertical-type oil (170) dampers each being provided therein with a large spring (192) in a manner to be interposed between said piston (191) and a bottom (176) of said vertical-type cylinder (170), said large spring (192) having a spring constant about three times as large as said spring constant of said rod spring (143) and each of said support rod springs (144).

2. A vibration proofing structure as defined in claim 1 wherein said spring constant of said rod spring (143) and each of said support rod springs (144) is set to be about 10 to 25.

3. A vibration proofing structure as defined in claim 1, wherein said spring constant of said large spring (192) is set to be about 30 to 80.

4. A vibration proofing structure as defined in claim 1, wherein said control means for externally controlling the amount of oil transferred between said upper oil chamber and said lower oil chamber through said oil passage means (180) comprises:
a bowl-like cap (181) arranged on said piston (191) for controlling the amount of oil transferred between said upper oil chamber (177) and said lower oil chamber (178) through said oil passage means (180);
a spring member (182) arranged between said cap (181) and an upper surface (175) of said piston (191) to upwardly force said cap (182);
a rod member (193) which is vertically arranged in said vertical-type cylinder (187) so as to be upwardly projected at an upper end thereof from said vertical-type cylinder (170) and on which said piston (191) is fitted;
a pipe fitted on said rod member (193) in said vertical-type cylinder (187) for adjusting a gap between said cap (181) and said upper surface of said piston (191); and
an adjustment nut threadedly fitted on said rod member (193) so as to be positioned at an upper end of said pipe, so that slight vertical movement of said adjustment nut permits the gap between said cap (181) and said upper surface of said piston (191) to be adjusted to control the amount of oil transferred between said upper oil chamber (177) and said lower oil chamber (178);
said large spring (192) being arranged between said piston (191) and said bottom (176) of said cylinder (187) while being kept compressed to a predetermined degree.

## Patentansprüche

1. Schwingungsdämpfungsstruktur für große Last, mit einer ersten Basis (101), einer zweiten Basis (154) und einer Mehrzahl von Öldämpfern (120), wobei die Öldämpfer (120) jeweils einen Tank (119), Kolben (121), die in dem Tank (119) angeordnet sind, und eine Stange (127) mit einem ersten Ende und einem zweiten Ende umfassen, wobei das erste Ende so an den Kolben (121) befestigt ist, daß eine Achse der Stange rechtwinklig zu einer Längsachse der Kolben (121) verläuft und sich das zweite Ende der Stange vom Tank (119) nach außen erstreckt; eine Mehrzahl von Streben (185), die jeweils an der ersten Basis (101) befestigt sind, um von der zweiten Basis (154) nach unten übertragene Last aufzunehmen, und die so angeordnet sind, daß sie sich von jener aus nach oben erstrecken, und die an ihrem oberen Ende mit einem halbkugelförmigen Teil (172) versehen sind,
**gekennzeichnet durch**
eine Mehrzahl von Schienen (103), die an der ersten Basis (101) an vorgegebenen Stellen befestigt sind;
Führungselemente (110), die jeweils so auf jeder der Schienen (103) passend montiert sind, daß sie in einer Längsrichtung der Schienen (103) verschiebbar sind;
wobei die Öldämpfer horizontalwirkende Öldämpfer (120) sind, deren jeweiliger Tank (119) auf jedem der Führungselemente (110) drehbar befestigt ist, und das zweite Ende der Stange (127), das sich von dem Tank (119) nach außen erstreckt, verschiebbar **durch** die zweite Basis (154) hindurchgeführt ist;
Halteplatten (122), die jeweils auf beiden. Seiten der horizontalwirkenden Öldämpfer (120) angeordnet sind;
wobei die Stange (127) so **durch** die Halteplatte (122) hindurchgeführt ist, daß sich der horizontalwirkende Öldämpfer (120) relativ zu der Halteplatte (122) um die Stange (127) drehen kann, und **durch** die zweite Basis (154) hindurchgeführt ist, wobei sie von einem Lager (156) drehbar gehalten wird, so daß der horizontalwirkende Öldämpfer (120) relativ zu der zweiten Basis (154) gedreht werden kann;
Tragstangen (125), die so an einer oberen Fläche jeder der Halteplatten (122) montiert sind, daß sie in einer Längsrichtung der Halteplatte (122) voneinander beabstandet sind und sich von dieser nach oben erstrecken;
wobei jede der Tragstangen (125) vertikal verschiebbar **durch** die zweite Basis (154) hindurchgeführt ist und an ihrem oberen Ende mit einem primären, scheibenförmigen Federlager (136) versehen ist;
wobei jede der Tragstangen (125) auf einem zwischen dem primären Federlager (136) und der zweiten Basis (154) definierten Abschnitt mit einer Tragstangenfeder (144) von vorgegebener Federkonstante versehen ist; und
wobei die Stange (127) an ihrem oberen Ende ein sekundäres, scheibenförmiges Federlager (136) trägt und auf einem zwischen dem sekundären Federlager (136) und der zweiten Basis (154) definierten Abschnitt mit einer Stangenfeder (143) von vorgegebener Federkonstante versehen ist; und
eine Mehrzahl von vertikalwirkenden Öldämpfern (170), die in der Nähe der horizontalwirkenden Öldämpfer (120) angeordnet sind;
wobei die vertikalwirkenden Öldämpfer jeweils versehen sind mit einem Vertikalzylinder (187), einem Kolben (191)der in dem Zylinder (187) angeordnet ist, um auf diese Weise eine obere Ölkammer (177) und eine untere Ölkammer (178) in dem Zylinder zu bilden, und mit vertikalverlaufenden Ölkanaleinrichtungen (180) ausgestattet ist, und mit einer Steuereinrichtung, um von außen die **durch** die Ölkanaleinrichtung zwischen der oberen Ölkammer (177) und der unteren Ölkammer (178) übertragene Ölmenge zu steuern;
wobei die vertikalwirkenden Öldämpfer (170) innen jeweils so mit einer großen Feder (192) ausgestattet sind, daß diese zwischen dem Kolben (191) und einem Boden (176) des Vertikalzylinders (170) eingesetzt ist, wobei die große Feder (192) eine Federkonstante aufweist, die etwa dreimal so groß ist wie die Federkonstante der Stangenfeder (143) und jeder der Tragstangenfedern (144).

2. Schwingungsdämpfungsstruktur nach Anspruch 1, wobei die Federkonstante der Stangenfeder (143) und jeder der Tragstangenfedern (144) auf etwa 10 bis 25 eingestellt ist.

3. Schwingungsdämpfungsstruktur nach Anspruch 1, wobei die Federkonstante der großen Feder (192) auf etwa 30 bis 80 eingestellt ist.

4. Schwingungsdämpfungsstruktur nach Anspruch 1, wobei die Steuereinrichtung zur externen Steuerung der zwischen der oberen Ölkammer und der unteren Ölkammer durch die Ölkanaleinrichtung (180) übertragenen Ölmenge aufweist:
eine schalenförmige Haube (181), die auf dem Kolben (191) angeordnet ist, um die zwischen der oberen Ölkammer (177) und der unteren Ölkammer (178) durch die Ölkanaleinrichtung (181) übertragene Ölmenge zu steuern;
ein Federelement (182), das zwischen der Haube (181) und einer oberen Fläche (175) des Kolbens (191) angeordnet ist, um die Haube (182) nach oben zu drücken;
ein Stangenelement (193), das vertikal in dem Vertikalzylinder (187) angeordnet ist, um sich an seinem oberen Ende aus dem Vertikalzylinder (170) nach oben herauszuerstrecken, und an dem der Kolben (191) angebracht ist;
ein an dem Stangenelement (193) in dem Vertikalzylinder (187) angeordnetes Rohr, um einen Spalt zwischen der Haube (181) und der Oberseite des Kolbens (191) einzustellen; und
eine Einstellmutter, die auf das Stangenelement (193) aufgeschraubt ist, um an einem oberen Ende des Rohrs angeordnet zu sein, so daß eine geringfügige Vertikalbewegung der Einstellmutter den Spalt zwischen der Haube (181) und der Oberseite des Kolbens (191) einstellen kann, um die zwischen der oberen Ölkammer (177) und der unteren Ölkammer (178) übertragene Ölmenge zu steuern;
wobei die große Feder (192) zwischen dem Kolben (191) und dem Boden (176) des Zylinders (187) angeordnet ist, während sie in einem vorgegebenen Maß unter Vorspannung wird.

## Revendications

1. Structure d'amortissement des vibrations pour une charge importante comprenant, une première base (101), une seconde base (154) et une pluralité d'amortisseurs à huile (120), lesdits amortisseurs à huile (120) incluant chacun un réservoir (119), des pistons (121) disposés dans ledit réservoir (119) et une tige (127) ayant une première extrémité et une seconde extrémité, ladite première extrémité étant montée sur lesdits pistons (121) de façon à rendre un axe de ladite tige perpendiculaire à un axe longitudinal desdits pistons (121) et la seconde extrémité de ladite tige s'étendant vers l'extérieur depuis ledit réservoir (119) ; une pluralité de goujons (185) montés chacun sur ladite première base (101) pour supporter la charge appliquée vers le bas à travers ladite seconde base (154) disposés de façon à s'étendre vers le haut à partir de celle-ci et munis sur leur extrémité supérieure d'un élément semi-sphérique (172) ;
**caractérisée par** :
◆ une pluralité de rails (103) montés à des positions prédéterminées sur ladite première base (101) ;
◆ des éléments de guidage (110) montés chacun de manière ajustée sur chacun desdits rails (103) de façon à pouvoir coulisser dans une direction longitudinale desdits rails (103) ;
◆ lesdits amortisseurs à huile étant des amortisseurs à huile du type horizontal (120), le réservoir (119) de chacun étant monté avec faculté de rotation sur chacun desdits éléments de guidage (110), ladite seconde extrémité de ladite tige (127) s'étendant vers l'extérieur depuis ledit réservoir (119) étant inséré de façon coulissante à travers ladite seconde embase (154) ;
◆ des plaques de maintien (122) disposées chacune sur chacun desdits amortisseurs d'huile de type horizontal (120) ;
◆ ladite tige (127) étant insérée à travers ladite plaque de maintien (122) de façon à permettre audit amortisseur à huile du type horizontal (120) d'être mis en rotation autour de la tige (127) par rapport à ladite plaque de maintien (122) et étant insérée à travers ladite seconde base (154) tout en étant supportée en rotation au moyen d'un palier (156) de façon à permettre à l'amortisseur à huile du type horizontal (120) d'être mis en rotation par rapport à ladite seconde base(154) ;
◆ des tiges de support (125) montées sur une surface supérieure de chacune desdites plaques de maintien (122) de façon à être espacées les unes des autres dans une direction longitudinale de ladite de plaque de maintien (122) et s'étendant vers le haut à partir de celle-ci ;
◆ les tiges de support (125) étant chacune insérée de façon coulissable verticalement à travers ladite seconde base (154) et munie au niveau de leur extrémité supérieure d'un palier principal élastique de type rondelle (136) ;
◆ lesdites tiges de support (125) étant chacune ajustée sur leur partie définie entre ledit palier principal à ressort (136) et ladite seconde base (154) avec un ressort de tige de support (144) d'une constante de ressort prédéterminée ; et
◆ ladite tige (127) étant montée sur son extrémité supérieure avec un palier secondaire à ressort du type rondelle (136) et ajusté sur une de ses parties définies entre ledit palier secondaire à ressort (136) et la seconde base (154) avec un ressort de tige (143) d'un constante de ressort prédéterminée ; et
◆ une pluralité d'amortisseurs à huile du type vertical (170) disposée à proximité desdits amortisseurs à huile du type horizontal (120) ;
◆ lesdits amortisseurs à huile du type vertical (170) incluant chacun un cylindre du type vertical (187), un piston (191) disposé dans ledit cylindre (187) pour définir une chambre à huile supérieure (177) et une chambre à huile inférieure (178) à travers tout ledit cylindre et formé avec un moyen de passage d'huile (180) de manière à s'étendre verticalement à travers celui-ci, et un moyen de commande pour commander de manière externe la quantité d'huile transférée à travers ledit moyen de passage d'huile entre ladite chambre d'huile supérieure (177) et ladite chambre d'huile inférieure (178) ;
◆ lesdits amortisseurs à huile du type vertical (170) étant chacun pourvu dans celui-ci d'un ressort de grande dimension (192) de manière à être interposé entre ledit piston (191) et une partie inférieure (176) dudit cylindre du type vertical (170), ledit ressort de grande dimension (192) ayant une constante de ressort environ trois fois plus grande que ladite constante de ressort dudit ressort à tige (143) et de chacun desdits ressorts à tige de support (144).

2. Structure d'amortissement des vibrations selon la revendication 1, dans laquelle ladite constante de ressort dudit ressort de tige (143) et de chacun desdits ressorts de tige de support (144) est fixée pour être environ de 10 à 25.

3. Structure d'amortissement des vibrations selon la revendication 1, dans laquelle ladite constante de ressort dudit ressort de grande dimension (192) est fixée pour être d'environ 30 à 80.

4. Structure d'amortissement des vibrations selon la revendication 1, dans laquelle ledit moyen de commande pour commander de manière externe la quantité d'huile transférée entre ladite chambre d'huile supérieure et ladite chambre d'huile inférieure à travers ledit moyen de passage d'huile (180) comprend :
◆ un chapeau du type bol (181) posé sur ledit piston (191) pour commander la quantité d'huile transférée entre ladite chambre d'huile supérieure (177) et ladite chambre d'huile inférieure (178) à travers ledit moyen de passage d'huile (180) ;
◆ un moyen de ressort (182) disposé entre ledit chapeau (181) et une surface supérieure (175) dudit piston (191) pour forcer vers le haut ledit chapeau (182) ;
◆ un élément de tige (193) qui est disposé verticalement dans ledit cylindre du type vertical (187) de façon à dépasser vers le haut au niveau de son extrémité supérieure depuis ledit cylindre du type vertical (170) et sur lequel ledit piston (191) est ajusté ;
◆ un tuyau raccordé sur ledit élément de tige (193) dans ledit cylindre du type vertical (187) pour ajuster un espace entre ledit chapeau ( 181) et ladite surface supérieure dudit piston (191) ; et
◆ un écrou d'ajustement ajusté par filetage sur ledit élément de tige (193) de façon à être positionné au niveau d'une extrémité supérieure dudit tuyau, de sorte qu'un léger déplacement vertical dudit écrou d'ajustement permet que l'espace entre ledit chapeau (181) et ladite surface supérieure dudit piston (191) soit ajusté pour commander la quantité d'huile transférée entre ladite chambre d'huile supérieure (177) et ladite chambre d'huile inférieure (178) ;
ledit ressort de grande dimension (192) étant disposé entre ledit piston (191) et ladite partie inférieure (176) dudit cylindre (187) tout en étant maintenu comprimé à un degré prédéterminé.
